# DEMANDE DE BREVET EUROPEEN

(11) **EP 4 001 460 A1**
(43) Date de publication de la demande: **25.05.2022**
(21) Numéro de dépôt: 21208594.8
(22) Date de dépôt: 16.11.2021
(51) Int. Cl.: C23C 24/04, C23C 30/00, F16C 9/04, F16C 33/10, F16C 33/14, F16C 33/20

(54) **PROCÉDÉ DE DÉPÔT D'UN REVÊTEMENT SUR UN ALÉSAGE D'UNE PIÈCE MÉCANIQUE PAR PROCÉDÉ COLD SPRAY**

(30) Priorité: 20.11.2020 FR 2011925
(71) Demandeur: Renault s.a.s, 92100 Boulogne Billancourt (FR)
(72) Inventeur: BONAY, Elodie, 78084 GUYANCOURT CEDEX (FR); GARCIN, Glwadys, 78084 GUYANCOURT CEDEX (FR); GRENTE, Christian, 78084 GUYANCOURT CEDEX (FR)
(74) Mandataire: Renault Group

(57) **Abrégé**

L'invention se rapporte à un procédé de dépôt d'un revêtement (11) dans un alésage d'une pièce mécanique par procédé Cold Spray (1).

Selon l'invention, le procédé comprend les étapes suivantes :
-une étape de mélange d'une poudre comprenant des particules métalliques ou polymériques afin de réaliser une matrice métallique ou en polymère, des particules dures de céramique et des particules de lubrifiants solides,
-une étape de projection dynamique à froid de la poudre mise en œuvre à l'étape précédente sur l'alésage de la pièce mécanique (1), et dépôt d'un revêtement (11) sur ledit alésage issu de la poudre projetée.

## Description

La présente invention concerne un procédé de dépôt d'un revêtement sur un alésage d'une pièce mécanique par procédé Cold Spray.

À titre d'exemple, lors de l'assemblage d'une bielle formée par un corps et un chapeau contenant les coussinets, les tensions de serrage des vis de fixation dues au frettage sont importantes. Le coussinet doit supporter les pressions répétées exercées par la bielle sur le maneton de vilebrequin, au cours du fonctionnement du moteur. Le coussinet supérieur de bielle, qui subit les efforts de combustion, est particulièrement sollicité et notamment en fatigue. D'autre part, le dimensionnement actuel de la bielle crée un encombrement qui conduit à avoir une taille de la mandoline augmentant l'encombrement et le poids du moteur.

Le dépôt direct d'un revêtement sur l'alésage de tête de bielle doit permettre de réduire les dimensions de la tête et faciliter l'évacuation de la chaleur générée au niveau du contact, en supprimant la résistance thermique entre le dos de coussinet et l'alésage de tête de bielle.

En plus de la réduction de masse lié à la suppression de la tôle d'acier constituant le substrat, le dépôt engendrera la réduction des masses et dimensions des pièces environnantes. Comme il n'est plus nécessaire d'avoir un frettage des coussinets, il est possible de réduire le diamètre des vis de bielle. En gagnant ainsi quelques millimètres sur la tête de bielle, la zone de débattement de la bielle (mandoline) au cours de son mouvement dans le moteur sera réduite. La largeur du carter-cylindre sera également réduite du même nombre de millimètres : les principaux gains de masse se situeront au niveau du carter cylindre. Des gains économiques sont également attendus avec la réduction des masses de matières utilisées et la suppression d'un poste de montage des demi-coussinets dans la tête de bielle. De plus, la solution nouvelle permet d'éviter le défaut d'alignement entre les 2 demi-coussinets. Dans ce contexte, l'objet de l'invention concerne un revêtement composite résistant mieux aux cycles réitérés d'arrêt/redémarrage du moteur par ses propriétés tribologiques, dans les phases de lubrification mixte ou limite. Les principales caractéristiques sont la résistance à la fatigue, la résistance à la corrosion, la résistance au grippage, la résistance à l'usure, une bonne inscrutabilité, une résistance au fluage et une bonne conductivité thermique afin d'évacuer plus rapidement la chaleur générée par le frottement.

A titre d'exemple, la demande WO2010 145813 A1 concerne un procédé de dépôt de revêtements de coussinets par la technique « Cold Spray » pour répondre à des problématiques d'usure. Les matériaux projetés peuvent être de différentes natures : Al, AlCu, AlSn, AlSnSi, AlSnSiCu, Cu, CuAl, CuSn, CuSnNi, CuSnBi et CuSnBiNi. Un lubrifiant solide (graphite, MoS2, Bn, ou PTFE) et des particules dures (SiC, CBN, Al2O3, B4C, Cr3Cr2, WC, Si3N4ou MoSi) sont ajoutés.

Pour rappel, la technique de projection dynamique à froid ou « cold spray » consiste à accélérer au-delà d'une vitesse critique un matériau d'apport (300 à 1500 m/s) sous forme de poudre. Ces vitesses entrainent une déformation plastique à l'impact de ce matériau sur un substrat à traiter, qui est suffisamment importante pour former un revêtement adhérent. Les températures des gaz de projection sont très faibles (typiquement comprises entre 300 à 1100 °C) en comparaison des températures utilisées dans d'autres procédés. La matière avant impact n'est donc pas fondue. Les matériaux ductiles se projettent facilement via ce procédé. Les matériaux céramiques sont aussi projetables de même que les matériaux polymères. Cela constitue l'avantage principal de ce procédé qui permet de projeter quasiment tout type de matériau.

Un procédé selon l'invention permet de déposer un revêtement sur un alésage d'une pièce mécanique pouvant par exemple être une bielle, destiné à assurer les fonctions de coussinets et dont l'encombrement est réduit par rapport à celui desdits coussinets.

L'invention a pour objet un procédé de dépôt d'un revêtement dans un alésage d'une pièce mécanique.

Selon l'invention, le procédé comprend les étapes suivantes :
- une étape de mélange d'une poudre comprenant des particules métalliques ou polymériques afin de réaliser une matrice métallique ou en polymère, des particules dures de céramique et des particules de lubrifiants solides,
- une étape de projection dynamique à froid de la poudre mise en œuvre à l'étape précédente sur l'alésage de la pièce mécanique (1), et dépôt d'un revêtement (11) sur ledit alésage issu de la poudre projetée.

Le principe d'un procédé selon l'invention est d'utiliser la technique de projection dynamique à froid encore appelée « cold spray » pour projeter sur un alésage d'une pièce mécanique des poudres de différentes natures, de façon à obtenir un revêtement apte à remplir la fonction de coussinets. Ces poudres sont :
- des poudres métalliques ou polymériques afin de réaliser une matrice métallique ou en polymère,
- des poudres de céramique faisant office de particules dures,
- des poudres de lubrifiants solides.

Grâce à ces trois types de poudres, le revêtement composite obtenu remplace avantageusement des coussinets en remplisant la même fonction que ceux-ci, tout en étant plus léger et moins encombrant. La pièce mécanique peut par exemple être une tête de bielle, un pied de bielle, un palier de ligne, un palier d'arbre à cames, des paliers d'arbre d'équilibrage, etc.

Selon une caractéristique possible de l'invention, l'étape de projection des grains de poudre sur l'alésage s'effectue au moyen d'un gaz sous pression dont la température est comprise entre 300°C et 1100°C.

Avantageusement, ce gaz est de l'azote (pour le Cold Spray haute pression) ou de l'air sous pression (pour le Cold Spray basse pression).

Selon une caractéristique possible de l'invention, les poudres métalliques sont à choisir parmi les poudres de bronze, de cuivre et d'acier.

Selon une caractéristique possible de l'invention, les poudres polymériques sont à choisir parmi des poudres de polyetheretherketone et de polyamide imide.

Selon une caractéristique possible de l'invention, les poudres constituant la matrice représentent au moins 60% en volume de la poudre totale projetée.

Selon une caractéristique possible de l'invention, les particules dures sont à choisir parmi des poudres de carbure de silicium et d'alumine.

Selon une caractéristique possible de l'invention, les particules dures représentent au plus 30% en volume de la poudre totale projetée.

Selon une caractéristique possible de l'invention, les lubrifiants solides sont à choisir parmi le bisulfure de molybdène, le graphite, le polyétrafluoroéthylène et le nitrure de bore hexagonal.

Selon une caractéristique possible de l'invention, les lubrifiants solides représentent au plus 10% en volume de la poudre totale projetée.

Un procédé selon l'invention présente l'avantage d'obtenir un revêtement composite apte à assurer la fonction de coussinets tout en demeurant d'une masse et d'un encombrement réduits par rapport à ceux-ci. Il en résulte une réduction de la consommation de carburant du véhicule comprenant ces revêtements composites. En effet, lorsqu'un procédé selon l'invention est appliqué à un alésage d'une tête de bielle, le dépôt direct d'un revêtement sur ledit alésage permet de réduire les dimensions de ladite tête et facilite donc l'évacuation de la chaleur générée au niveau du contact, en supprimant la résistance thermique entre le dos de coussinet et l'alésage de tête de bielle. En plus de la réduction de masse liée à la suppression de la tôle d'acier constituant le substrat du coussinet, le dépôt permet la réduction des masses et dimensions des pièces environnantes. Comme il n'est plus nécessaire d'avoir un frettage des coussinets, on peut réduire le diamètre des vis de bielle. En gagnant ainsi plusieurs millimètres sur la tête de bielle, on réduit la zone de débattement de la bielle (mandoline) au cours de son mouvement dans le moteur. On peut donc aussi réduire la largeur du carter-cylindre du même nombre de millimètres. C'est sur cette pièce, la plus lourde d'un moteur, que se font les principaux gains de masse. Un procédé selon l'invention a de plus l'avantage d'engendrer des gains économiques avec la réduction des masses de matières utilisées et la suppression d'un poste de montage des demi-coussinets dans la tête de bielle. Un autre avantage d'un tel procédé est l'augmentation de la marge de résistance au grippage. En effet, l'évacuation de la chaleur (contact avec le substrat) est optimisée. Les particules lubrifiantes participent à la résistance au grippage du matériau. En favorisant une structure poreuse via le procédé Cold Spray, des réserves d'huiles sont assurées au niveau du contact. De plus, la dureté de la dernière couche du revêtement est optimisée afin que les particules résiduelles issues du contact et transportées par l'huile puissent s'incruster à la surface du revêtement. Une telle solution contribue à la réduction des émissions de CO2 et à la fiabilité des moteurs (résistance au grippage, rotation de coussinets).

La description détaillée qui va suivre est effectuée en supposant que le dépôt du revêtement s'effectue sur un alésage d'une tête de bielle.

Un procédé de projection dynamique à froid selon l'invention permet de projeter des de la poudre contre un alésage de tête de bielle, de vilebrequin, ou autre, afin de créer un revêtement composite spécifique permettant de remplacer avantageusement des coussinets rapportés.

Le principe d'un tel procédé est d'accélérer au-delà d'une vitesse critique un matériau d'apport (300 à 1500 m/s) sous forme de poudre. Ces vitesses entrainent une déformation plastique de la matière constituant cette poudre lorsqu'ils impactent l'alésage, de manière à former un revêtement 11 homogène ayant une bonne adhérence sur l'alésage. Les températures des gaz de projection sont très faibles (typiquement comprises entre 300 à 1100 °C) en comparaison des températures utilisées dans les autres procédés, si bien que les poudres projetées ne risquent pas de fondre avant leur impact contre l'alésage. L'accélération des particules de poudre s'effectue au moyen d'un gaz sous pression pouvant par exemple être de l'azote.

On donne ci-après une description détaillée d'un mode de réalisation préféré d'un procédé de dépôt selon l'invention, en se référant à la figure suivante :

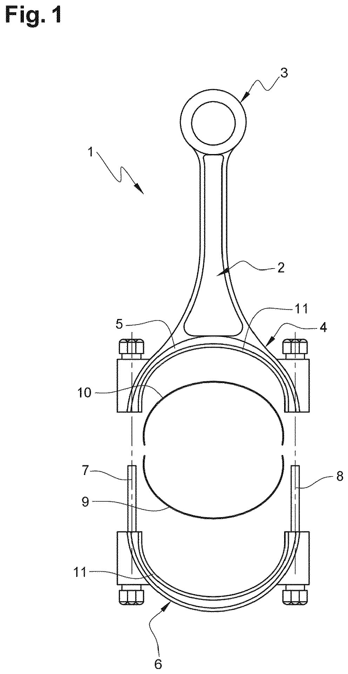

[Fig. 1] représente une vue de côté d'une bielle sur laquelle peut être appliquer un procédé selon l'invention.

Pour rappel, en se référant à la figure 1, une bielle 1 d'un moteur thermique comprend schématiquement un corps allongé 2 dont une première extrémité 3 est constituée par une bague circulaire, et dont une deuxième extrémité 4 est constituée par une pièce 5 en demi-cercle, dont le diamètre interne est supérieur au diamètre interne de la bague 3. Ces deux extrémités 3, 4 sont à considérer par rapport à un axe longitudinal du corps 2. Une pièce complémentaire 6 en demi-cercle vient se visser à la deuxième extrémité 4 du corps 2 au moyen de deux vis 7, 8 de sorte que les deux pièces 5, 6 en demi-cercle se complètent pour former une paroi cylindrique délimitant un canal interne cylindrique. Les deux vis 7, 8 sont allongées et parallèles et s'étendent parallèlement à un axe longitudinal du corps allongé 2. Pour les bielles 1 existantes, deux coussinets 9, 10 viennent tapisser le fond des deux pièces 5, 6 en demi-cercle. Un procédé selon l'invention permet de s'affranchir desdits deux coussinets 9, 10 en permettant le dépôt d'un revêtement 11 composite adapté, sur l'alésage de la bielle 1 délimité par le fond desdites pièces 5, 6, et ayant les mêmes propriétés que lesdits deux coussinets 9, 10. Sur la figure 1, les deux coussinets 9, 10 et le revêtement 11 apparaissent en même temps, alors que ledit revêtement 11 est destiné à remplacer lesdits deux coussinets 9, 10.

Un procédé selon l'invention permet donc de déposer un revêtement 11 composite sur l'alésage de tête de bielle 1 en utilisant la technique de la projection dynamique à froid encore appelée « cold spray ».

Ce procédé comprend les étapes suivantes :
- une étape de mélange d'une poudre comprenant des particules métalliques ou polymériques afin de réaliser une matrice métallique ou en polymère, des particules dures de céramique et des particules de lubrifiants solides,
- une étape de projection dynamique à froid de la poudre mise en œuvre à l'étape précédente sur l'alésage de la pièce mécanique (1), et dépôt d'un revêtement (11) sur ledit alésage issu de la poudre projetée.

Afin de lever toute ambiguïté, l'expression « une étape de mélange d'une poudre comprenant différents types de particules » est équivalent à l'expression « une étape de mélange de plusieurs poudres ayant différents types de particules »

Les poudres métalliques sont choisies parmi du bronze CuSn8 ou CuSn10, du cuivre ou de l'acier pouvant ou non être inoxydable de type 316L ou 410L.

Les poudres polymériques sont choisies parmi le PEEK (polyetheretherketone) et le PAI (polyamide imide).

Les particules dures sont choisies parmi des carbures de silicium (SiC) ou de l'alumine (Al2O3).

Les lubrifiants solides sont choisis parmi le bisulfure de molybdène (MoS2), le graphite, le PTFE (Polytétrafluoroéthylène) ou le nitrure de bore hexagonal (h-BN).

Les poudres métalliques ou polymériques constituent la matrice au moins 60% en volume de la composition totale de la poudre projetée, les particules dures représentant au plus 30% en volume de la poudre totale projetée et les lubrifiants solides représentant au plus 10% en volume de la poudre totale projetée.

Le revêtement 11 composite déposé peut être doté d'une couche d'accroche d'une épaisseur n'excédant pas les 100 µm, et comprend une matrice incluant des particules dures et des lubrifiants solides. L'épaisseur totale du revêtement 11 est de quelques centaines de microns. Il est cependant possible d'envisager différentes structures : monocouche ou multicouches. Pour pourvoir être utilisées avec une technique de type « Cold Spray » les poudres doivent respecter les critères de taille suivants :
- Matériaux métalliques : d10 d'un minimum de 15 µm et d90 maximum de 45 µm,
- Matériaux céramiques : d50 compris entre 10 et 20 µm,
- Matériaux polymères : d50 de 50 µm maximum - d90 < 90µm

L'application d'un procédé selon l'invention, peut notamment être étendue aux dépôts de revêtements sur des pièces ayant des fonctions similaires que celle d'une bielle 1, telles que par exemple un palier de ligne, un palier d'arbre à cames, des paliers d'arbre d'équilibrage, etc.

## Revendications

1. Procédé de dépôt d'un revêtement (11) dans un alésage d'une pièce mécanique (1), **caractérisé en ce qu'**il comprend les étapes suivantes :
- une étape de mélange d'une poudre comprenant des particules métalliques ou polymériques afin de réaliser une matrice métallique ou en polymère, des particules dures de céramique et des particules de lubrifiants solides,
- une étape de projection dynamique à froid de la poudre mise en œuvre à l'étape précédente sur l'alésage de la pièce mécanique (1), et dépôt d'un revêtement (11) sur ledit alésage issu de la poudre projetée.

2. Procédé selon la revendication 1, caractérisé en ce l'étape de projection des grains de poudre sur l'alésage s'effectue au moyen d'un gaz sous pression dont la température est comprise entre 300°C et 1100°C.

3. Procédé selon l'une quelconque des revendications 1 ou 2, **caractérisé en ce que** les poudres métalliques sont à choisir parmi des poudres de bronze, de cuivre et d'acier.

4. Procédé selon l'une quelconque des revendications 1 à 3, **caractérisé en ce que** les poudres polymériques sont réalisés dans un matériau à choisir parmi le polyetheretherketone et le polyamide imide.

5. Procédé selon l'une quelconque des revendications 1 à 4, **caractérisé en ce que** les poudres constituent la matrice représentent au moins 60% en volume de la poudre totale projetée.

6. Procédé selon l'une quelconque des revendications 1 à 5, **caractérisé en ce que** les particules dures sont choisies parmi le carbure de silicium et l'alumine.

7. Procédé selon l'une quelconque des revendications 1 à 6, **caractérisé en ce que** les particules dures représentent au plus 30% en volume de la poudre totale projetée.

8. Procédé selon l'une quelconque des revendications 1 à 7, **caractérisé en ce que** les lubrifiants solides sont choisis parmi le MoS2, PTFE, graphite et hBN 9-Procédé selon l'une quelconque des revendications 1 à 8, **caractérisé en ce que** les lubrifiants solides représentent au plus 10% en volume de la poudre totale projetée.
